Europäisches Patentamt

European Patent Office

Office européen des brevets

(11) Publication number: **0 221 244 B1**

(12) **EUROPEAN PATENT SPECIFICATION**

(45) Date of publication of patent specification: **23.09.92**  (51) Int. Cl.⁵: **H02P 7/635**

(21) Application number: **86109994.3**

(22) Date of filing: **21.07.86**

(54) **Variable speed pump-up control method and apparatus.**

(30) Priority: **02.10.85 JP 219490/85**
**07.02.86 JP 23997/86**

(43) Date of publication of application:
**13.05.87 Bulletin 87/20**

(45) Publication of the grant of the patent:
**23.09.92 Bulletin 92/39**

(84) Designated Contracting States:
**CH DE FR LI**

(56) References cited:
**EP-A- 141 372**
**DE-A- 2 935 320**
**US-A- 4 467 259**

**PATENT ABSTRACTS OF JAPAN, vol. 6, no. 32 (E-96)[910], 26th February 1982; & JP - A - 56 150 987 (TOKYO SHIBAURA DEKI) 21-11-1981**

(73) Proprietor: **HITACHI, LTD.**
**6, Kanda Surugadai 4-chome**
**Chiyoda-ku, Tokyo 100(JP)**

Proprietor: **THE KANSAI ELECTRIC POWER CO., INC.**
**3-22, Nakanoshima-3-chome Kita-ku**
**Osaka-shi, Osaka 530(JP)**

(72) Inventor: **Haraguchi, Eiji**
**18-1, Yamatedai-3-chome**
**Ibaraki-shi(JP)**
Inventor: **Nakagawa, Hiroto**
**1-1-204, Hyakuyama, Shimamotocho**
**Mishima-gun Osaka(JP)**
Inventor: **Nohara, Haruo**
**8-2, Kanesawacho-6-chome**
**Hitachi-shi(JP)**
Inventor: **Goto, Masuo**
**11-10, Mizukicho-1-chome**
**Hitachi-shi(JP)**
Inventor: **Kuwahara, Takao**
**1-13, Nishinarusawacho-4-chome**
**Hitachi-shi(JP)**
Inventor: **Bando, Akira**
**8-3-304, Nishinarusawacho-1-chome**
**Hitachi-shi(JP)**
Inventor: **Ono, Kenichi**
**3-1-507, Takasuzucho-2-chome**
**Hitachi-shi(JP)**

(74) Representative: **Patentanwälte Beetz sen. - Beetz jun. Timpe - Siegfried - Schmitt- Fumian**
**Steinsdorfstrasse 10**
**W-8000 München 22(DE)**

## Description

This invention relates to a variable speed pump system having a driving apparatus comprising a rotary electric machine and a frequency converter and a frequency detector for detecting the frequency of the electric power system during a pump operation, whereby in accordance with a variation in the electric power system frequency, the output of the driver apparatus is adjusted automatically as to suppress the frequency variation, thereby contributing to stabilization of the electric power system.

The variable speed driver apparatus is configured such that its output directly follows a driving output command supplied from the outside, and a control signal for suppression of the frequency variation is superposed on the driving output command and inputted to the driver apparatus.

Further, in the variable speed driver apparatus, the opening of a flow rate regulator (hereinafter referred to as a guide vane) of the hydraulic machine is controlled by a function generator which receives at least an actual revolution number of the hydraulic machine and produces an optimum guide vane opening.

In a conventional pump-up system, because a driving motor is a synchronous motor, the rotation speed of a hydraulic machine in operation is fixed to a constant value corresponding to the frequency of an electric power system. The guide vane opening of the hydraulic machine, on the other hand, is set to an optimum opening in accordance with a given lift head. Namely, in the conventional pump system, both the revolution number and guide vane opening of the hydraulic machine are in fact fixed and hence adjustments of loads on the hydraulic machine are in fact impossible. In other words, a forcible adjustment of loads would be rather unpractical because this leads to a great fall of operational efficiency of the hydraulic machine. Even if the load adjustment is done away units and the guide vane opening is set to an optimum opening in one-to-one correspondence relationship with a varying lift head, there arises a problem that when the lift head changes to a great extent, the efficiency of the hydraulic machine will change with a change in lift head over a large variation width, causing a loss of operational efficiency and consequent vibration which may damage the hydraulic machine.

Accordingly, with the aim of operating the variable driver system with high efficiency irrespective of the driving output command and changes in the lift head, in other words, with the aim of obtaining a variable speed driver system the output of which can be varied with high efficiency, studies have been continued. For example, a paper No. 553 entitled "Variable Speed Running Characteristics of Large Capacity Synchronous Motors", [Denkigakkai Zenkokutaikai], 1984 describes that by altering a conventional pump dynamo standing for a synchronous machine into a so-called variable speed dynamo system which is operated by means of an induction machine with secondary excitation, the resulting variable speed dynamo system can be operated with high efficiency irrespective of the driving output and lift head. This paper, however, fails to mention any specified manner of controlling.

As described above, the driving output of the conventional pump system can not in fact be adjusted and when viewed from the electric power system, it becomes a simple load which is by no means adjustable and adjustment is in no way expected for improving demand and supply balance of power in the electric power system.

The variable speed pump system has been highlighted as an approach to the conventional problems as described hereinbefore but no known example is found which gives a specified system construction.

Incidentally, it has hitherto been a general practice to attach a rotation speed controlling governor to a hydraulic turbine connected to a synchronous dynamo. Because of the synchronous dynamo being a synchronous machine, the synchronous dynamo is rotated at a speed equal to the electric power system frequency and this type of governor constantly detects a variation in the electric power system frequency to work for suppressing the frequency variation. This governor generally has a response of about 5 to 50 seconds in terms of time constant.

Conventionally, in many applications, this type of governor for synchronous dynamo plant is applied with AFC (automatic frequency control). The AFC operation resembles the synchronous dynamo plant governor operation in that it monitors the electric power system frequency to control the same for stabilization. However, different from the governor, the AFC is not applied separately to individual dynamo plants but is incorporated as an expedient in common to a part or the entirety of the electric power system, and an output signal as a result of AFC is transmitted to the individual synchronous dynamo plants to control, in group, the individual plants under the command of the AFC. Thus, while the governor controlling can afford to provide a response commensurate with conditions of each plant, the AFC controlling is collective controlling. In addition, the response speed of the AFC is generally set to be for smaller than that of the governor controlling, that is, in the order of minutes in terms of time constant.

Incidentally, since the pump system to which the present invention is applied permits load adjustment as described previously, this system can double contribution to the electric power system by adopting, together with the AFC for the electric power system, individual controlling for controlling the load of each plant such that the power demand and supply relation in the electric power system can be mitigated.

In EP-A-0 141 372 a method and an apparatus for controlling a variable-speed hydraulic power generation system using an induction generator of wound-rotor type is disclosed, in which variation in frequency of the power system connected to the power generation system or power demand from the power system is detected and the detected value is applied to a control unit for controlling a guide vane of a hydraulic machine driving the generator, thereby dampening variation in frequency or power balance of the power system. In this system, upon detection by a power detector that the power supply-minus-load demand balance of the power system is varied, an output setting signal is temporarily corrected through a change rate operational amplifier and a dead zone element.

## SUMMARY OF THE INVENTION

The present invention has for its object to provide a variable speed pump system which responds to the electric power system frequency controlling signal and AFC signal and an external driving output command to control the driving output of the variable speed motor pump rapidly with high accuracy, and to provide a controlling apparatus which can set the guide vane of a hydraulic machine to an optimum opening to operate the pump at the maximum efficiency point and to permit stable operation of a variable speed pump system, especially, in a variable speed pump system including a variable speed driver apparatus of the type in which a driver motor is a wound-rotor type induction motor and exciting windings of its rotor are AC excited from the electric power system, i.e., the primary side through a frequency converter such as a cyclo-converter.

According to the present invention this object is achieved by the features indicated in the characterizing part of claim 1.

Incidentally, the load of the hydraulic machine (pump or pump hydraulic turbine) to be driven changes very abruptly when water is introduced to establish priming pressure following racing start of the hydraulic machine and when the guide vane is opened and actual pump-up is initiated, with the result that the motor driving output $P_E$ and actual load power PM are unbalanced to temporarily swing the difference therebetween to a great extent and hence the hydraulic machine is decelerated rapidly and, in extremity, the revolution number of the hydraulic machine possibly falls below a variable speed width, resulting in prevention of continuing operation. To avoid these inconveniences, there are provided a differentiation circuit which calculates a differential or an inexact differential of a revolution number N of the hydraulic machine corresponding to the unbalance ($P_E$ - $P_M$) between output and load, and a zone suppressive circuit which succeeds the differentiation circuit and produces an output signal when the output signal of the differentiation circuit exceeds a predetermined level in absolute value. Thus, a correction control signal is applied to the driving output command in accordance with the output signal of the zone suppressive circuit to ensure that the motor driving output $P_E$ can rapidly follow the actual load power $P_M$ even when the hydraulic machine is in any transient condition including a shift process to running and on the other hand a correction gain sufficient for the $P_E$ to temporarily go beyond the $P_M$ can be obtained, thereby kicking back the revolution number N.

## BRIEF DESCRIPTION OF THE DRAWINGS

Fig. 1 is a schematic diagram for explaining the principle of a variable speed pump-up dynamo system conducive to explain the present invention.

Fig. 2 is a schematic block diagram for explaining controlling of the variable speed pump system conducive to explain the present invention.

Fig. 3 is a circuit diagram showing a first embodiment.

Fig. 4 is a graph showing the relation between output and efficiency of a variable speed machine in Fig. 3.

Fig. 5 is a graph showing characteristics used by an optimum valve opening calculator in Fig. 2.

Fig. 6 is a circuit diagram showing a second embodiment.

Fig. 7 is a circuit diagram showing an example wherein the variable speed pump system is connected for operation to an electric power system through a transmission line.

Fig. 8 is a graph showing the relation between output and efficiency of a hydraulic turbine in Fig. 6.

Fig. 9 is a circuit diagram showing an embodiment of the invention.

Fig 10 is a block diagram showing the essential part in Fig. 9.

Fig. 11 is a graph showing the relation between generated power output and efficiency.

Fig. 12 is a circuit diagram showing an example of a network incorporating the Fig. 9 system of the invention.

Fig. 13 is a graph showing results of simulation of the Fig. 12 network.

Fig. 14 is a block diagram showing another embodiment of the invention.

Fig. 15 is a graph showing simulation characteristics conducive to explain the present invention.

## DESCRIPTION OF THE PREFERRED EMBODIMENTS

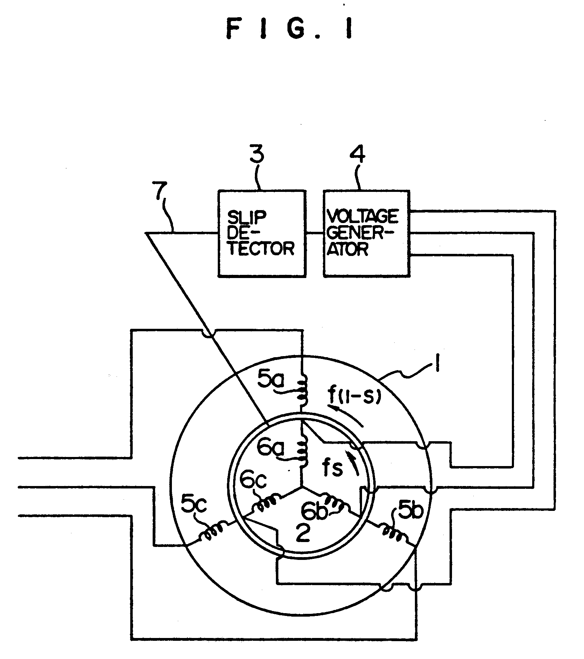

Fig. 1 schematically shows a variable speed pump dynamo system useful to explain the present invention. The dynamo has primary and secondary sides of three-phase windings.

As shown in Fig. 1, a stator 1 has phase windings 5a to 5c for three phases a, b and c, and a rotor 2 has phase windings 6a to 6c for three phases a, b and c. Where the rated frequency is f and the slip is s, the speed of the rotor 2 is represented by f(1 - s) and the rotating magnetic field of the rotor 2 can rotate with zero slip, that is, at a synchronous speed which is equal to the speed of the rotating magnetic field of stator 1, when the exciting winding of the rotor 2 is excited at a frequency equal to a product of f and s - (hereinafter referred to as slip frequency). The revolution number of the rotor is measured through a revolution number measuring section 11, a slip detector 3 derives a slip from an output signal of the revolution number measuring section 11, and a voltage generator 4 generates a voltage in accordance with the slip to excite the secondary windings. With this construction, even when the rotor 2 rotates at a speed of a desired revolution number, a rotating magnetic field at a frequency equal to electric power system frequency can always develop in the armature windings. Namely, in the example of Fig. 1, the rotating field of the rotor 2 is expressed by

$$f(1 - s) + fs = f \qquad (1)$$

indicating that the output at the rated frequency can be obtained irrespective of values of slip.

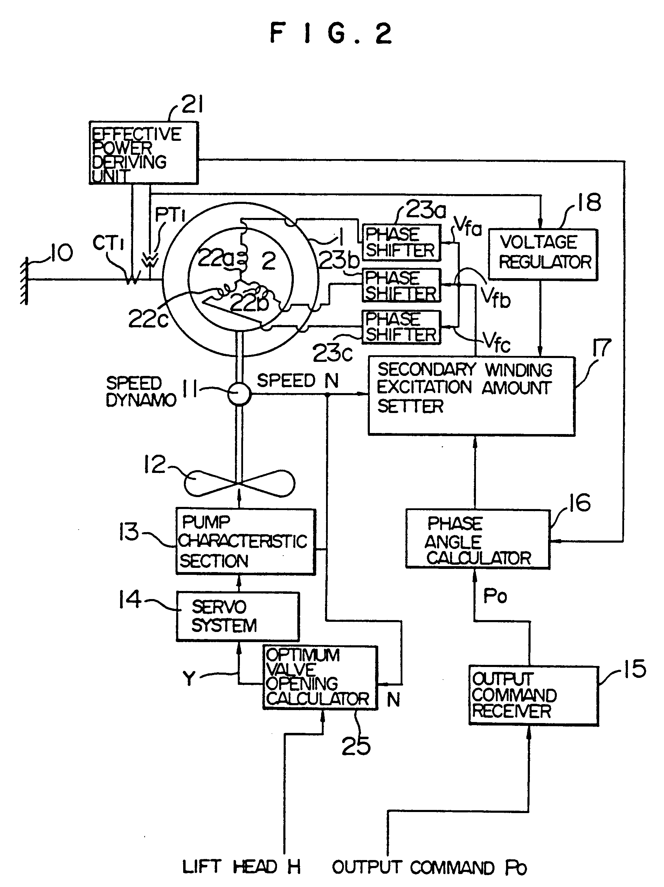

The Fig. 2 system is merely illustrative of an example of variable speed driver apparatus, but the present invention intends to provide a system which can be applied to a part or the entirety of the variable speed driver apparatus or system in order to fairly contribute to stabilization of the electric power system and ensure stable and steady variable speed pump.

Fig. 2 illustrates a specified example of a system with a variable speed machine connected to an electric power system and being in operation. The electric power system is denoted by reference numeral 10 and the same stator and rotor as those of Fig. 1 are denoted by reference numerals 1 and 2, respectively. When a lift head of fluid H and an output command $P_O$ are given, the output command $P_O$ is fed to a phase angle calculator 16 through an output command receiver 15. On the other hand, pursuant to a function which is preparedly determined by the lift head H and the revolution number N, an optimum guide vane opening calculator 25 sets up an optimum guide vane opening Y which in turn is applied to a servo system 14 to provide, with a delay, a guide vane opening of a pump. A pump characteristic section 13 (indicative of a characteristic of the pump and not a hardware) then provides a characteristic determined by the guide vane opening, determined with a delay at the servo system 14, and the revolution number N. A runner 12 of the pump is directly connected to the rotor 2 of the variable speed machine and rotated thereby. A speed dynamo 11 detects rotation of the rotor to produce the revolution number N. A current transformer CT 1 and a voltage transformer PT 1 produce output signals which are supplied to an effective power deriving unit 21 for calculation of effective power on the basis of outputs of the current and voltage transformers. The phase angle calculator 16, responsive to an output signal of the effective power deriving unit 21 and the output command $P_O$ of the output command receiver 15, calculates a phase angle for the secondary windings. A secondary winding excitation amount setter 17 is adapted to set an amount of excitation for the secondary circuit, and a voltage regulator 18 controls voltage for excitation. The amount of excitation set by the setter 17 is distributed to the exciting windings 22a, 22b and 22c for three phases a, b and c through phase shifters 23a, 23b and 23c. Thus, a difference $\Delta\delta$ (phase angle) between the power control command and the actual power output is used to calculate the phase angle of the secondary windings to thereby control the driving output. On the other hand, the guide vane opening is controlled to an optimum value on the basis of the lift head and revolution number.

The present invention then intends to set up the system optimized during a pumping operation, as will be seen from Fig. 2.

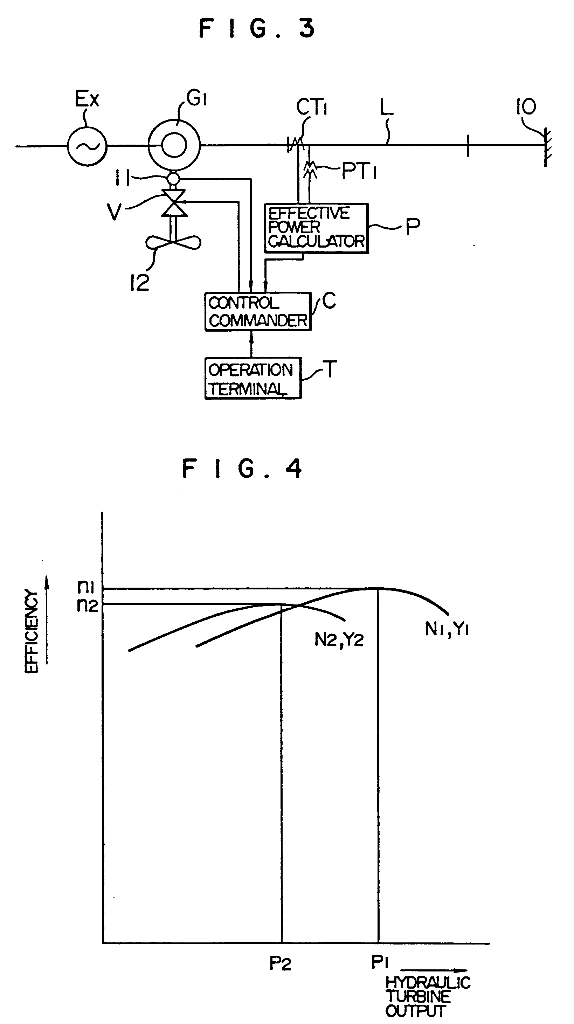

A first embodiment will be described specifically with reference to Fig. 3. There is illustrated in Fig. 3 an example of a so-called variable speed motor-pump $G_1$ capable of running at a speed of a desired revolution number by means of an induction machine provided with secondary excitation, the system being connected for running to an electric power system 10 through a transmission line L. The transmission line L is equipped with a voltage transformer PT 1 and current transformer CT 1.

Generally, a Francis pump turbine is used for a variable speed pump dynamo plant and the relation between required driving output and efficiency is shown in Fig. 4. In this figure, abscissa represents required driving output and ordinate represents efficiency, with the revolution number N and valve opening Y used as parameters. At an output $P_1$, the turbine exhibits a maximum efficiency $\eta_1$ for revolution number $N_1$ and guide vane opening $Y_1$ and at an output $P_2$, it exhibits a maximum efficiency $\eta_2$ for revolution number $N_2$ and guide vane opening $Y_2$. In this way, the revolution number at which the maximum efficiency is obtained differs depending on the output, and a first specified intention of the present invention is to operate the turbine at the maximum efficiency point.

Referring to Fig. 3, when a command $P_O$ of power needed for the motor is supplied from an operation terminal T, the variable speed motor-pump $G_1$ must be controlled such that the guide vane opening V is determined from revolution number N produced from the speed dynamo 11 and lift head H by means of a control commander C allowing for the motor characteristic and lift head H, in order that the motor can operate with high efficiency in accordance with the above values. With a command for changing the motor output applied under this condition, the guide vane is set to an opening optimized for the present operation condition (N, H) in accordance with lift head H and revolution number N in a predetermined manner so as to maximize efficiency of the motor.

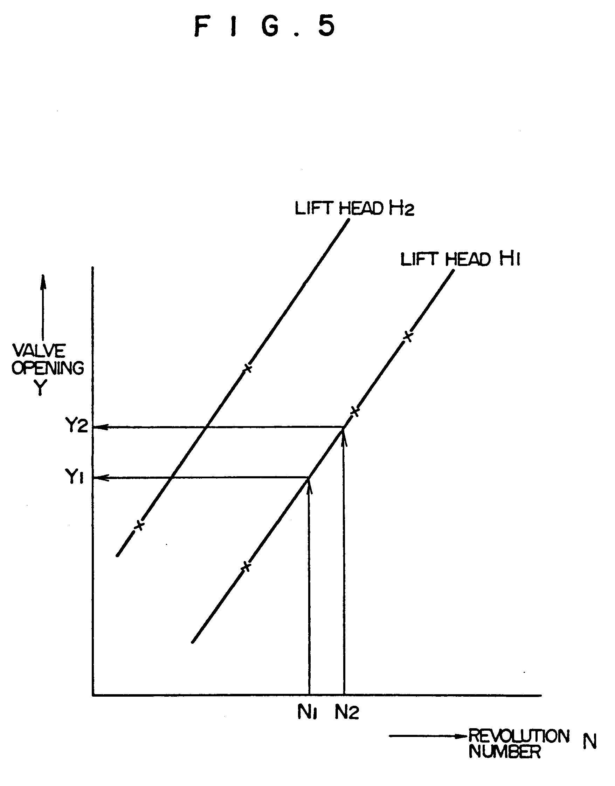

The manner of obtaining a guide vane opening for maximum efficiency from revolution number N and lift head H is graphically exemplified in Fig. 5 wherein points for maximum efficiency over operating or running points are plotted with lift head H used as a parameter, and revolution number N and guide vane opening Y represented on abscissa and ordinate, respectively. In this example, a lift head $H_1$ is larger than a lift head $H_2$. Fig. 5 indicates that as the revolution number changes from $N_1$ to $N_2$ during operation with lift head $H_1$, the guide vane opening needs to be controlled from $Y_1$ to $Y_2$.

On the other hand, deviation of the motor revolution number from a rated value can be corrected using a slip as information for the unit $E_x$ as explained previously, thereby producing an output at the rated frequency.

A specified example of the secondary excitation will now be described. As shown in Fig. 2, the three-phase secondary excitation windings are operated as follows. The amount of excitation can be controlled with either a voltage source or a current source and the following description will be given of an excitation controlling based on voltage source.

More particularly, among parameters derived from the command applied by the operation terminal T shown in Fig. 3, the phase angle $\Delta\delta$ affecting the excitation amount for the three phases a, b and c is controlled to supply to the secondary excitation circuit voltages $V_{fa}$, $V_{fb}$ and $V_{fc}$ for three phases a, b and c expressed as below:

$$V_{fa} = E \cdot \sin(2\pi f \cdot s + \delta_o + \Delta\delta)$$
$$V_{fb} = E \cdot \sin(2\pi f \cdot s + \delta_o + \Delta\delta - 120°)$$
$$V_{fc} = E \cdot \sin(2\pi f \cdot s + \delta_o + \Delta\delta - 240°) \qquad (2)$$

where E is a voltage value determined by the slip and the running condition of the variable speed machine, $\delta_o$ is a phase angle determined by the running condition of the variable speed machine, and $\Delta\delta$ is a phase angle controllable by the output of the control commander.

In controlling in accordance with the above equation, voltage E is controlled with a control command for reactive power and phase angle $\Delta\delta$ is controlled with a control command for effective power.

The present invention contemplates stable controlling of the above system during AFC operation for pumping.

To this end, it is necessary for the above arrangement to control the phase angle $\Delta\delta$ for the exciting voltage so as to converge the revolution number and power to a desired or target value and to control the guide vane opening so as to reach the maximum efficiency. Effective power is used as information for controlling the phase angle in accordance with the following equation

$$\Delta\delta = \int k_1 (p - P_o)dt + k_{1p} (P - P_o) \qquad (3)$$

where $P_o$ is a desired value of effective power, P is an actual value of effective power (calculated by an effective power calculator P), and $k_1$ and $k_{1p}$ are constants.

The guide vane opening is controlled to an optimum opening as shown in Fig. 2 on the basis of the lift head and actual value of the revolution number. As a result, if the revolution number N increases, then the guide vane opening Y will also increase so that the motor input is controlled so as to increase for balance with the motor output.

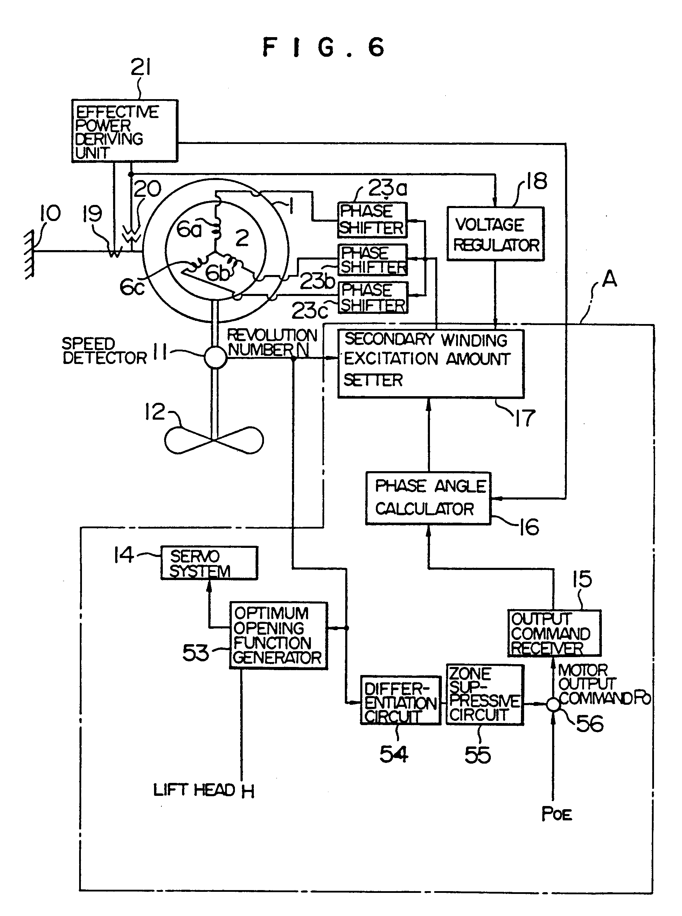

Fig. 6 schematically shows a second embodiment incorporating a control system of a variable speed driver apparatus for driving a hydraulic machine, the driver apparatus having a rotor with excitation windings and being connected for running to an electric power system. Referring to Fig. 6, the same stator and rotor as those of Fig. 1 are denoted by reference numerals 1 and 2, respectively, and the electric power system is denoted at 10. When a lift head of fluid H and a motor output command $P_o$ are given, the motor output command $P_o$ is fed to a phase angle calculator 16 through an output command receiver 15. On the other hand, pursuant to a function which is preparedly determined by the lift head H and revolution number N, an optimum opening function generator 53 sets up an optimum guide vane opening Y which in turn is supplied to a servo system 14 including a guide valve, thereby determining an ultimate guide vane opening. Incidentally, loading power $P_M$ of a hydraulic machine (pump) is subject to its inherent characteristics and determined by revolution number N, guide vane opening Y and lift head H in question. If the loading power $P_M$ differs from a motor output $P_E$, a rotary portion of the hydraulic machine and a rotary portion including the rotor of the motor directly connected to a shaft of the hydraulic machine and a main spindle are accelerated or decelerated in accordance with a difference $(P_E - P_M)$. As the revolution number N increases, the guide vane opening command outputted from the optimum opening function generator 53 also increases to raise the loading power $P_M$ of the hydraulic machine and the revolution number N stops increasing when $P_E - P_M = 0$ reaches. In Fig. 6, there are also seen a speed detector 11, a runner 12 of the hydraulic machine, a current transformer 19, and a voltage transformer 20, an effective power deriving unit 21 for calculation of effective power on the basis of outputs of the current transformer 19 and voltage transformer 20. The phase angle calculator 16, responsive to an output signal of the effective power deriving unit 21 and the output command $P_o$ delayedthrough the output command receiver 15, calculates a phase angle for the secondary windings. A setter 17 is adapted to set an amount of excitation for the secondary circuit and a voltage regulator 18 controls voltage for excitation. The amount of excitation set by the setter 17 is distributed to the exciting windings 6a, 6b and 6c for three phases a, b, and c through phase shifters 23a, 23b and $\overline{23c}$. Thus, the difference between the power control command and the actual power output is used to calculate the phase angle of the secondary exciting windings 6a to 6c to thereby control the output power. On the other hand, the guide vane opening Y is controlled to an optimum value on the basis of the lift head H and revolution number N.

In addition, there are also provided a kick back circuit comprised of a differentiation circuit 54 for differentiating the revolution number N and a zone suppressive circuit 55. This kick back circuit functions to firmly hold the revolution number N within a predetermined variable speed width to permit continuing operation even when the load on the hydraulic machine being driven changes abruptly. More specifically, an output signal of the differentiation circuit 54 for differentiating the revolution number N is supplied to the zone suppressive circuit 55 to cause it to produce a signal which decreases a command $P_{OE}$ when a differential of the revolution number N exceeds a predetermined positive value and to produce a signal which decreases the $P_{OE}$ when a differential of the revolution number conversely exceeds a predetermined negative value, and the resulting signal from the zone suppressive circuit 55 is added to the $P_{OE}$ at an adder 56, thereby providing a motor output command $P_o$.

The present invention then intends to set up the system optimized during pumping operation, as will be seen from Fig. 6.

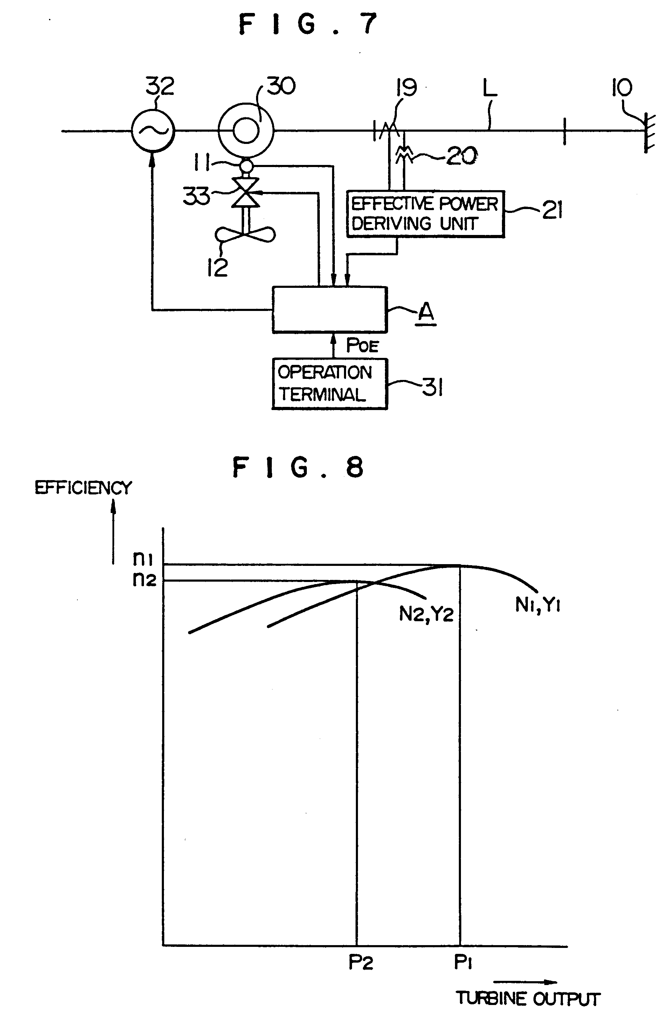

Fig. 7 illustrates an example of a so-called variable speed motor-pump 30 capable of running at a speed of a desired revolution number by means of an induction machine provided with secondary excitation, the system being connected for running to an electric power system 10 through a transmission Line L. The transmission line L is equipped with a voltage transformer 20 and a current transformer 19.

Generally, a Francis turbine is used for a pumping dynamo and has the relation between turbine output and efficiency as shown in Fig. 8. In this figure, abscissa represents turbine output and ordinate represents efficiency, with the revolution number N and guide vane opening Y used as parameters. At an output $P_1$, the turbine exhibits a maximum efficiency $\eta_1$ for revolution number $N_1$ and guide vane opening $Y_1$ and at an output $P_2$, it exhibits a maximum efficiency $\eta_2$ for revolution number $N_2$ and guide vane opening $Y_2$. In this way, the revolution number at which the maximum efficiency is obtained differs depending on the output, and the present invention intends to operate the turbine at the maximum efficiency point.

In the variable speed motor-pump 30 shown in Fig. 7, the power command $P_{OE}$ is supplied to the motor from an operation terminal 31. Associated with the system 30 are an exciter 32, a speed detector 11, a guide vane 33, a runner 12, an effective power deriving unit 21 and a section A corresponding to a block with chained line encirclement in Fig. 6.

Exemplarily, the optimum opening function generator 53 can also operate to obtain a guide vane opening for maximum efficiency from revolution number and lift head in accordance with the graph of Fig. 5. In view of this figure, the optimum guide vane opening Y is determined from the revolution number N with the lift heads $H_1$ and $H_2$ used as parameters, the former parameter being larger than the latter. It is told from Fig. 5 that as the revolution number changes from $N_1$ to $N_2$ during operation with lift head $H_1$, the guide vane opening needs to be controlled from $Y_1$ to $Y_2$.

The motor output is controlled by adjusting the phase of AC exciting currents and at the same time, the output voltage is controlled by adjusting the amplitude of AC exciting currents.

A embodiment of the invention directed to running control of a variable speed pump system will now be described.

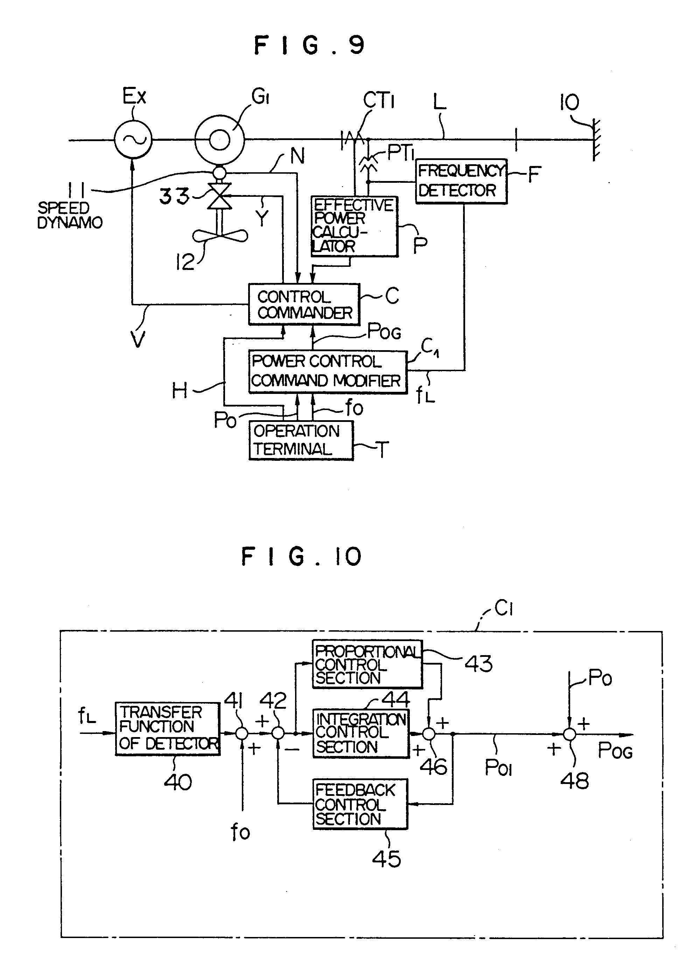

In a variable speed pump system of this invention as shown in Fig. 9, a variable speed motor-pump $G_1$ drives a runner 12 of a pump and power is supplied to the machine $G_1$ from an electric power system 10 through a transmission line L.

In particular, an optimum guide vane opening Y of a guide vane V is calculated on the basis of a lift head command H supplied from an operation terminal T and a revolution number N detected from a speed dynamo 11 to control opening of the guide vane 33. On the other hand, an effective power calculator P calculates effective power on the basis of detected values from a voltage transformer PT 1 and a current transformer CT 1, and a control commander C, allowing for the calculated effective power and the revolution number N, responds to a power control command $P_o$ received from the operation terminal T to supply an exciting voltage v to a unit Ex of the variable speed motor-pump $G_1$. Thus, the output can be controlled under a predetermined condition of pump operation.

Additionally, as shown in Fig. 9, a power control command modifier $C_1$ is interposed between the operation terminal T and control commander C. This modifier $C_1$ adds a power control command $P_{01}$ representative of a difference between an electric power system frequency $f_1$ detected by a frequency detector F and a reference frequency (target frequency) $f_o$ to the power control command $P_o$ fed from the operation terminal T, thereby producing a resultant power control command $P_{OG}$ which in turn is supplied to the control commander C.

The variable speed pump system of Fig. 9 is exemplarily implemented in the form of Fig. 2 arrangement previously explained in connection with the Fig. 3 embodiment, especially added with a dotted line block (Fig. 10) of the power control command modifier $C_1$. When, in the pump operation control system, a lift head command H is inputted, the optimum guide vane opening calculator 25 is subject to the predetermined characteristic of Fig. 5 stipulating the relation between revolution number N and guide vane opening Y with lift head command H used as a parameter, so as to produce a guide vane opening command $Y_{OPT}$ commensurate with a revolution number N. This guide vane opening command $Y_{OPT}$ is fed to the servo system 14, which supplies an opening in compliance with the inputted guide vane opening $Y_{OPT}$ to the guide vane 33 (Fig. 9) to adjust the same. In this manner, the pump 12 is so controlled as to deliver a power output in accordance with the lift head H.

On the other hand, the control system operates during pump operation as will be described below. When neglecting the modifier $C_1$, a given power control command $P_o$ is supplied to the phase angle calculator 16 through the output command receiver 15. When the power control command $P_o$ is supplied stepwise, the excitation of the secondary windings 22a to 22c of the variable speed motor-pump $G_1$ is disadvantageously controlled stepwise by the stepped command $P_o$. Therefore, the output command receiver 15 also functions to convert the stepped command $P_o$ into a gradually changing signal. On the other hand, effective power is calculated by the effective power calculator P (Fig. 9) on the basis of system voltage and current detected from the transformers PT 1 and CT 1 and fed to the phase angle calculator 16.

The phase angle calculator 16 calculates the exciting voltage v to be applied to the secondary windings 22a to 22c. Thus, the calculator 16 responsive to the command from the operation terminal T controls the phase angle $\Delta\delta$ among parameters necessary for excitation of the secondary windings 22a to 22c. The secondary excitation amount setter 17 determines exciting voltages $V_{fa}$, $V_{fb}$ and $V_{fc}$ for the secondary windings 22a to 22c pursuant to equation (2) mentioned previously on the basis of the revolution number N (frequency f) and phase angle $\Delta\delta$. The calculated exciting voltages $v_{fa}$, $v_{fb}$ and $V_{fc}$ are supplied to the windings 22a to 22c through the phase shifters 23a, 23b and 23c, respectively. The voltage regulator 18 corrects the exciting voltage.

In this manner, the system is controlled such that the optimum guide vane opening is obtained under the direction of the lift head command H while the proper power level is obtained under the direction of the phase angle $\Delta\delta$ for the secondary windings 22a to 22c calculated from the difference between the power control command $P_o$ and an actual output.

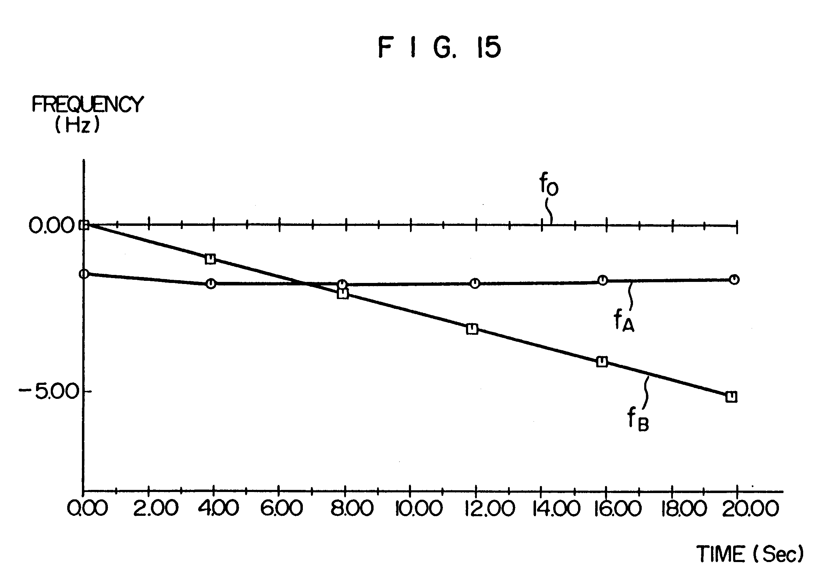

Here, controlling of electric power system frequency response of the individual variable speed pump plants, one of the points of the present invention, will be again described. Fig. 15 shows a response characteristic of a variable speed pump system without the electric power system frequency responsive controlling. As the total load on the electric power system increases, balance between the total load and the total generated power of the electric power system is disturbed and the electric power system frequency $f_B$ begins to fall. At this time, because of the absence of the electric power system frequency responsive controlling function, the revolution number of the variable speed pump-up system is held constant as indicated at $f_A$. Namely, in spite of the deficient power of the electric power system, the variable speed pump system will not decrease its own load in order to assist the electric power system.

The power control command modifier $C_1$ of the invention as shown in Fig. 9 will now be detailed with reference to Fig. 10.

In Fig. 10, a block 40 stands for a transfer function of a detector, and the actual system frequency $f_L$ is passed through the transfer function block 40 and subtracted from the reference frequency $f_0$ at a first operation section 41. A difference output signal from the first operation section 41 is controlled by a proportional control section 43 and an integration control section 44 and output signals from these sections 43 and 44 are added together at a second operation section 46, thus completing PI control. An output signal of the second operation section 46 is fedback through a feedback control section 45 and subtracted from the output signal of the first operation section 41 at a third operation section 42, thereby making zero the amount of offset of this system. Subsequently, an output signal $P_{01}$ from the operation section 46 is added with the power control command $P_o$ at a fourth operation section 48. An output signal $P_{OG}$ is then delivered out of the fourth operation section 48.

The actual system frequency $f_L$ is derived from the output voltage of the voltage transformer PT 1, as shown in Fig. 9, by using the frequency detector F such as a frequency relay or a frequency counter.

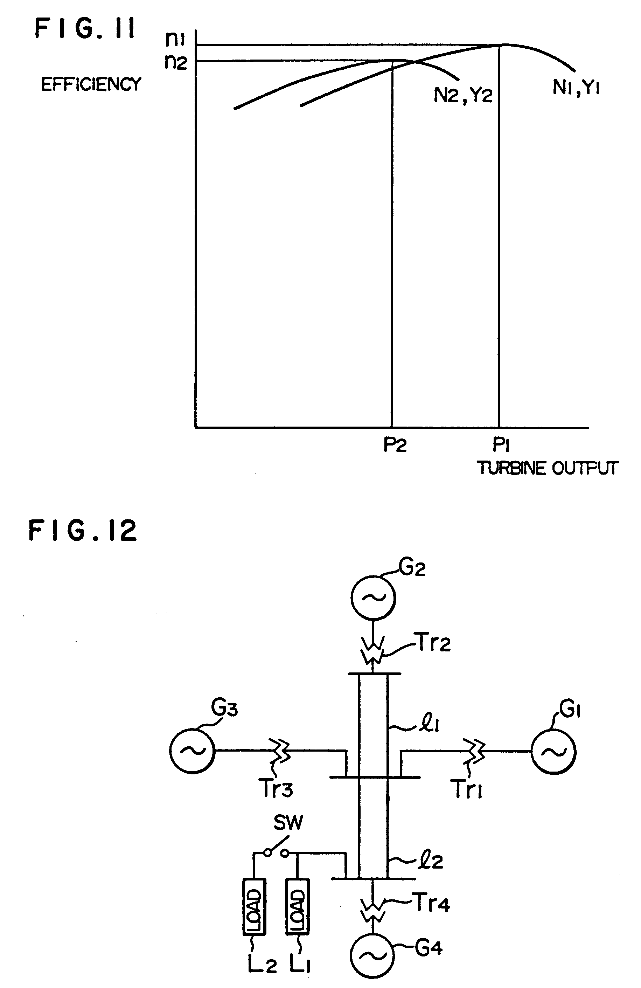

Incidentally, a Francis pump turbine is generally used for the pumping dynamo and has the relation between pump turbine output and efficiency as shown in Fig. 11. In this figure, abscissa represents required driving output and ordinate represents efficiency, with the revolution number N and guide vane opening Y used as parameters. At a required driving output $P_1$, the turbine exhibits a maximum efficiency $\eta_1$ for revolution number $N_1$ and guide vane opening $Y_1$ and at an output $P_2$, it exhibits a maximum efficiency $\eta_2$ for revolution number $N_2$ and guide vane opening $Y_2$. In this way, the revolution number at which the maximum efficiency is obtained also differs depending on the output, and it is of significance that the turbine runs at the maximum efficiency point.

As will be understood from the foregoing description, the output command receiver 15 of Fig. 2 is supplied with the command $P_{OG}$ which contains the power control command $P_{01}$ capable of nullifying the difference between the system frequency $f_1$ and reference frequency $f_0$, that the exciting voltages $v_{fa}'$ $v_{fb}$, and $v_{fc}$ to be supplied to the secondary windings 22a to 22c of the variable speed pump-up system from the excitation amount setter 17 are corrected to values which can absorb or compensate for variations in the system frequency, thereby attaining continuing stabilization of the electric power system frequency.

An example will now be described wherein a plurality of variable speed motor-pumps are installed in a network. Fig. 12 shows a network comprising four motor-pumps $G_1$ to $G_4$. Of the four motor-pumps, the system $G_1$ is applied with teachings of the present invention and the systems $G_2$ to $G_4$ are of conventional systems using synchronous machines. The motor-pumps $G_1$ to $G_4$ are interconnected together through transmission lines $\ell_1$ and $\ell_2$ and transformers $T_{r1}$ to $T_{r4}$. The network is loaded with loads $L_1$ and $L_2$.

When considering that the network is in operation only with the load $L_1$, dynamo power from the motor-pumps $G_1$ to $G_4$ is balanced with power requested by the load and the network is not overloaded. Consequently, the system frequency $f_L$ does not vary.

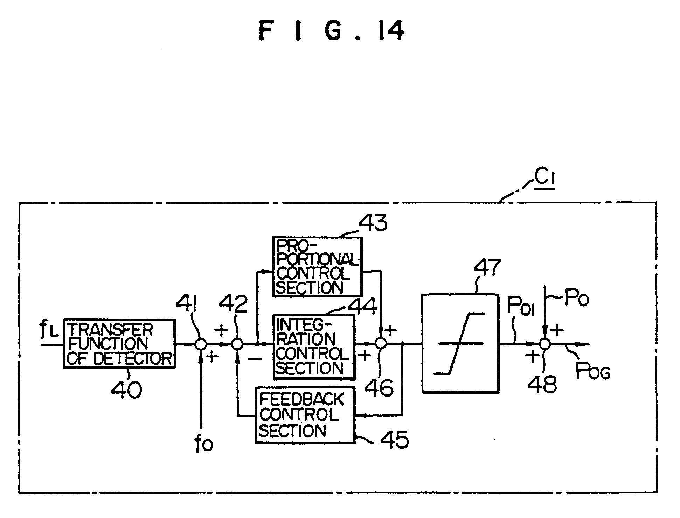

Assume now that a switch is turned on to add the load $L_2$ and the system load increases. Then, while the conventional dynamo systems fail to prevent the system frequency $f_L$ from decreasing, the variable speed motor-pump $G_1$ according to the present invention is controlled as described hereinbefore such that the exciting voltages of the secondary windings 22a to 22c are adjusted to compensate for a difference from the reference frequency $f_0$ due to the decrease in the system frequency $f_L$ with the result that the system frequency $f_L$ recovers the reference frequency $f_0$ after a transient decrease and stabilizes. Practically, however, frequency responsive control capability (load adjusting capacity) of the variable speed motor-pump $G_1$ is limited and application of a load in excess of the capacity of the variable speed motor-pump $G_1$ is actually undesired. To eliminate this inconvenienec, another embodiment of the present invention is provided as shown in Fig. 14 wherein between the second and fourth operation sections 46 and 48, a limiter 47 is inserted which is commensurate with the capacity of the variable speed motor-pump $G_1$ to release the system $G_1$ from compensation in excess of predetermined levels. Accordingly, if the compensation by the single variable speed motor-pump $G_1$ is insufficient, the remaining system or systems may be of variable speed motor-pump system.

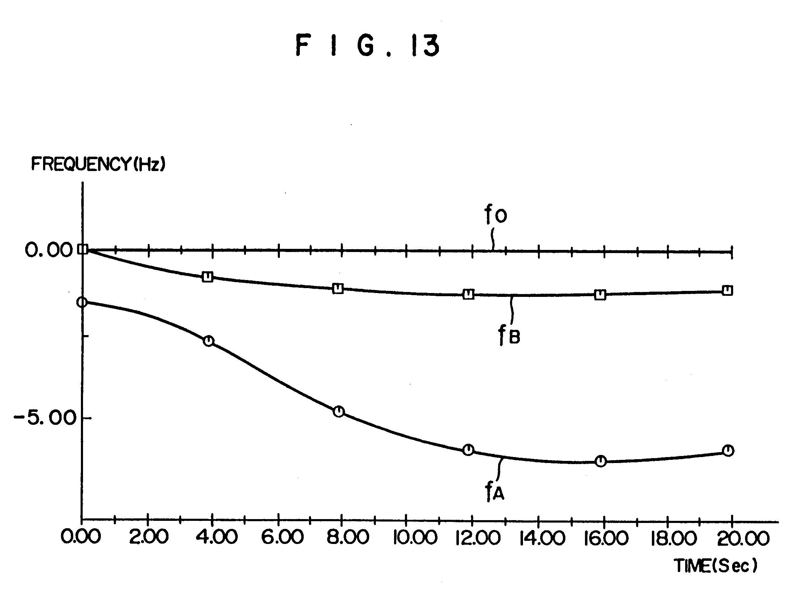

The above operation is simulated to obtain results as shown in Fig. 13. It will be seen from Fig. 13 that the rotation speed $f_A$ of the variable speed motor-pump $G_1$ decreases to reduce its load to thereby recover power balance in the electric power system and on the other hand the frequency $f_B$ of the pump dynamo systems $G_2$ to $G_4$, other than the variable speed motor-pump $G_1$, slightly decreases but as time elapses, approaches gradually to the reference frequency $f_o$.

Further, the AFC described previously should be superposed upon the driving output command and inputted. Thus, the pump-up dynamo system, which operates for power generation to meet varying load of the electric power system in the daytime but operates for pump-up at night, can have very high load corresponding capability.

The foregoing description has been given by way of the excitation control based on voltage source but the invention may likewise applied to excitation control based on current source.

As has been described, the present invention duly fulfils its objects as follows.

(1) Independent and separate controlling of each plant can be ensured which responds to a variation in the frequency of the electric power system to control the driving output toward a direction in which the power demand and supply relationship in the electric power system can be mitigated.

(2) The frequency variation response speed is fairly increased beyond that of the AFC, i.e., up to the governor control level in the conventional synchronous dynamo plant in order to ensure rapid response to the electric power system.

(3) A specified control of a variable speed driven apparatus is provided which responds to the electric power system frequency controlling signal and AFC signal and an external driving output command to control the driving output of the variable speed driver apparatus rapidly with high accuracy.

(4) A control is provided which can set the guide vane of a hydraulic machine to an optimum opening to permit stable operation of a variable speed motor-pump.

## Claims

1. A variable speed pump system comprising:
   a variable speed motor-pump ($G_1$) operating at a speed of a desired revolution number (N) by means of a frequency converter attached thereto;
   a transmission line (L) for connecting said variable speed motor-pump ($G_1$) to an electric power system (10);
   a speed detector (11) for providing a revolution number (N) of said variable speed motor-pump ($G_1$);
   an effective power calculator (21, P) for calculating the effective power; and
   control means (C) for determining an opening (Y) of a guide vane (V) of said variable speed motor-pump ($G_1$) as a function of the value of a lift head signal (H), derived from a water-level detector, and the value of the revolution number (N), and
for determining a difference between a power control command ($P_0$) value and the actual power output (P), provided by the effective power calculator (21, P), for controlling the frequency converter of the variable speed pump system;
**characterized by**
a power control command modifier ($C_1$), connected between said control means (C) and an operation terminal (T),
for adding a power control command ($P_{01}$), indicative of a difference between a frequency ($f_L$) of said electric power system (10) and a reference frequency ($f_0$), to a power control command ($P_0$), supplied from said operation terminal (T), and delivering the resulting signal ($P_{OG}$) to said control means (C).

2. A variable speed pump system according to claim 1, wherein said power control command modifier ($C_1$) comprises:
   a first operation section (41) for determining the difference between the electric power system frequency ($f_L$) and the reference frequency ($f_0$);
   a proportional control section (43) and an integration control section (44), controlled by the output signal of said first operation section (41);
   a second operation section (46) for adding output signals of said proportional control section (43) and said integration control section (44) to effect PI controlling;
   a feedback control section (45) for feedbacking an output signal ($P_{01}$) of said second operation section (46) to the output of said first operation section (41); and
   a third operation section (48) for adding the output signal ($P_{01}$) of said second operation section (46) and a power control command ($P_0$) to produce an output command ($P_{OG}$).

3. A variable speed pump system according to claim 2, characterized by further comprising a limiter (47), connected between said second operation section (46) and said third operation section (48), for limiting compensation exceeding the capacity of said variable pump system ($G_1$).

4. A variable speed pump system according to claim 1, characterized by further comprising:
   differentiation means (54) connected to said speed detector (11) determining the rate of change of the actual rotational speed of said pump per unit time;
   correction signal generating means (55) for generating a correction signal when said determined rate of change goes beyond a predetermined value or falls below a predetermined value; and

means (56) for correcting a power control command ($P_{OE}$),supplied from said operation terminal (T), for said motor by superposing said correction signal on said power control command.

## Patentansprüche

1. Pumpensystem mit veränderbarer Drehzahl, bestehend aus:
   - einer Motor-Pumpe ($G_1$) mit veränderbarer Drehzahl, die mittels eines daran angeschlossenen Frequenzwandlers mit einer Drehzahl einer Soll-Umdrehungszahl (N) betrieben wird;
   - einer Übertragungsleitung (L) zur Verbindung dieser Motor-Pumpe ($G_1$) mit veränderbarer Drehzahl mit einem elektrischen Kraftstromnetz (10);
   - einem Drehzahlmesser (11) zur Lieferung einer Umdrehungszahl (N) der Motor-Pumpe ($G_1$) mit veränderbarer Drehzahl;
   - einem Wirkleistungs-Rechner (21, P) zur Berechnung der Wirkleistung; und
   - einer Steuerungseinrichtung (C) zur Bestimmung einer Öffnungsweite (Y) eines Leitflügels (V) der Motor-Pumpe ($G_1$) mit veränderbarer Drehzahl als Funktion des Wertes eines Hubhöhensignals (H), abgeleitet von einem Wasserpegelmesser und dem Wert der Umdrehungszahl (N), und zur Feststellung einer Differenz zwischen einem Leistungssteuer-Befehlswert ($P_0$) und der augenblicklichen Ausgangsleistung (P), die durch den Wirkleistungs-Rechner (21, P) erfolgt, zur Steuerung des Frequenzwandlers des Pumpensystems mit veränderbarer Drehzahl,
   **gekennzeichnet durch**
   eine Abänderungseinrichtung ($C_1$) für den Leistungs-Steuerbefehl, eingeschaltet zwischen der Steuerungseinrichtung (C) und einem Betriebspult (T), zur Hinzufügung eines Leistungs-Steuerbefehls ($P_{01}$), das eine Differenz zwischen der Frequenz ($f_L$) des elektrischen Kraftstromnetzes (10) und einer Bezugsfrequenz ($f_0$) anzeigt, zu einem Leistungs-Steuerbefehl ($P_0$), der vom Betriebspult (T) geliefert ist, und zur Weitergabe des resultierenden Signals ($P_{OG}$) an die Steuereinrichtung (C).

2. Ein Pumpensystem mit veränderbarer Drehzahl nach Anspruch 1, bei dem die Abänderungseinrichtung ($C_1$) für den Leistungs-Steuerbefehl besteht aus:
   - einem ersten Betriebsteil (41) zur Bestimmung der Differenz zwischen der Frequenz ($f_L$) des elektrischen Kraftstromnetzes und der Bezugsfrequenz ($f_0$);
   - einem Proportional-Steuerteil (43) und einem Integrations-Steuerteil (44), gesteuert durch das Ausgangssignal des ersten Betriebsteils (41);
   - einem zweiten Betriebsteil (46) zur Hinzufügung der Ausgangssignale des Proportional-Steuerteils (43) und des Integrations-Steuerteils (44) zur Durchführung einer PI-Steuerung;
   - einem Rückführungs-Steuerteil (45) zur Rückführung eines Ausgangssignals ($P_{01}$) des zweiten Betriebsteils (46) zum Ausgang des ersten Betriebsteils (41); und
   - einem dritten Betriebsteil (48) zur Addition des Ausgangssignals ($P_{01}$) des zweiten Betriebsteils (46) und eines Leistungs-Steuerbefehls ($P_0$), um einen Ausgangs-Steuerbefehl ($P_{OG}$) zu erhalten.

3. Ein Pumpensystem mit veränderbarer Drehzahl nach Anspruch 2, dadurch gekennzeichnet, daß es ferner einen Begrenzer (47) aufweist, der zwischen dem zweiten Betriebsteil (46) und dem dritten Betriebsteil (48) eingeschaltet ist, zur Begrenzung der Kompensation, die die Leistungsfähigkeit des Pumpensystems mit veränderbarer Drehzahl übersteigt.

4. Ein Pumpensystem mit veränderbarer Drehzahl nach Anspruch 1, dadurch gekennzeichnet, daß es ferner umfaßt:
   - Mittel (54) zur Differentiation, verbunden mit dem Drehzahlmesser (11) zur Bestimmung der Rate der augenblicklichen Umdrehungszahl der Pumpe pro Zeiteinheit;
   - Korrektursignalbildungsmittel (55) zur Bildung eines Korrektursignals, wenn die Rate der Umdrehungszahl über einen vorbestimmten Wert hinausgeht oder unter einen vorbestimmten Wert abfällt; und
   - Mittel (56) zur Korrektur eines Leistungs-Steuerbefehls ($P_{OE}$), geliefert vom Betriebspult (T) für den Motor durch Überlagerung des Korrektursignals auf den Leistungs-Steuerbefehl.

## Revendications

1. Système de pompe à vitesse variable comportant :

une motopompe à vitesse variable $(G_1)$ fonctionnant à une vitesse d'un nombre de tours désiré (N) au moyen d'un convertisseur de fréquence fixé à celle-ci ;

une ligne de transmission (L) pour relier ladite motopompe à vitesse variable $(G_1)$ à un système d'énergie électrique (10) ;

un détecteur de vitesse (11) pour délivrer un nombre de tours (N) de ladite motopompe à vitesse variable $(G_1)$ ;

un calculateur de puissance efficace (21, P) pour calculer la puissance efficace ; et

des moyens de commande (C) pour déterminer une ouverture (Y) d'une palette de guidage (Y) de ladite motopompe à vitesse variable $(G_1)$ en fonction de la valeur d'un signal de colonne d'élévation (H), dérivée d'un détecteur de niveau d'eau et de la valeur du nombre de tours (N), et

pour déterminer une différence entre une valeur de commande de contrôle de puissance $(P_0)$ et la puissance réelle délivrée (P), délivrée par le calculateur de puissance efficace (21, P), pour commander le convertisseur de fréquence du système de pompe à vitesse variable ; caractérisé par

un modificateur de commande de contrôle de puissance $(C_1)$, connecté entre lesdits moyens de commande (C) et une borne d'opération (T), pour additionner une commande de contrôle de puissance $(P_{01})$, représentative d'une différence entre une fréquence $(f_N)$ dudit système d'énergie électrique (10) et une fréquence de référence $(f_0)$, à une commande de contrôle de puissance $(P_0)$, délivrée par ladite borne d'opération (T), et délivrer le signal résultant $(P_{OG})$ auxdits moyens de commande (C).

2. Système de pompe à vitesse variable selon la revendication 1, dans lequel ledit modificateur de commande de contrôle de puissance $(C_1)$ comporte :

une première section opérationnelle (41) pour déterminer la différence entre la fréquence du système d'énergie électrique $(f_N)$ et une fréquence de référence $(f_0)$ ;

une section de commande proportionnelle (43) et une section de commande intégrale (44), commandée par le signal de sortie de ladite première section opérationnelle (41) ;

une seconde section opérationnelle (46) pour additionner les signaux de sortie de ladite section de commande proportionnelle (43) et de ladite section de commande intégrale (44) pour effectuer une commande PI ;

une section de commande à rétroaction (45) pour appliquer en retour un signal de sortie $(P_{01})$ de ladite seconde section opérationnelle (46) au signal de sortie de ladite première section opérationnelle (41) ; et

une troisième section opérationnelle (48) pour additionner le signal de sortie $(P_{01})$ de ladite seconde section opérationnelle (46) et une commande de contrôle de puissance $(P_0)$ pour produire une commande de sortie $(P_{OG})$.

3. Système de pompe à vitesse variable selon la revendication 2, caractérisé en ce qu'il comporte en outre un limiteur (47), monté entre ladite seconde section opérationnelle (46) et ladite troisième section opérationnelle (48), pour limiter une compensation dépassant la capacité dudit système de pompe à vitesse variable $(G_1)$.

4. Système de pompe à vitesse variable selon la revendication 1, caractérisé en ce qu'il comporte en outre :

des moyens de différentiation (54) connectés audit détecteur de vitesse (11) déterminant la vitesse de variation de la vitesse de rotation réelle de ladite pompe par unité de temps ;

des moyens de génération de signal de correction (55) pour générer un signal de correction lorsque ladite vitesse déterminée de variation dépasse une valeur déterminée ou tombe au-dessous d'une valeur prédéterminée : et

des moyens (56) pour corriger une commande de contrôle de puissance $(P_{OE})$ délivrée par ladite borne d'opération (T), pour ledit moteur en superposant ledit signal de correction à ladite commande de contrôle de puissance.

F I G . I

# F I G . 2

EFFECTIVE POWER DERIVING UNIT — 21

PHASE SHIFTER — 23a — Vfa

PHASE SHIFTER — 23b — Vfb

PHASE SHIFTER — 23c — Vfc

VOLTAGE REGULATOR — 18

10

CT1

PT1

22a

2

22c

22b

SPEED DYNAMO — 11 — SPEED N

SECONDARY WINDING EXCITATION AMOUNT SETTER — 17

12

PUMP CHARACTERISTIC SECTION — 13

PHASE ANGLE CALCULATOR — 16

SERVO SYSTEM — 14

Po

Y

OPTIMUM VALVE OPENING CALCULATOR — N — 25

OUTPUT COMMAND RECEIVER — 15

LIFT HEAD H     OUTPUT COMMAND Po

# F I G . 3

# F I G . 4

# F I G . 5

# F I G . 6

# F I G . 7

# F I G . 8

# F I G . 9

# F I G . 10

# F I G. II

EFFICIENCY

$n_1$
$n_2$

N2,Y2    N1,Y1

P2    P1

TURBINE OUTPUT

# F I G. I2

G2

Tr2

G3    $\ell_1$    G1

Tr3    Tr1

SW

$\ell_2$

LOAD    LOAD    Tr4

L2    L1    G4

20

# F I G . 13

# F I G . 14

F I G. 15